# EUROPEAN PATENT APPLICATION

(11) **EP 2 197 195 A2**
(43) Date of publication of application: **16.06.2010**
(21) Application number: 09178087.4
(22) Date of filing: 04.12.2009
(51) Int. Cl.: H04N 1/00, H04N 1/48

(54) **Digital photo frame having a built-in scanner**

(30) Priority: 11.12.2008 TW 98202747 U
(71) Applicant: Mustec Systems Inc., Hsin-Chu 300 (TW)
(72) Inventor: Lin, Jung-Chou, 30051, Hsin-Chu City (TW); Zhang, Hongliang, 310035, Hangzhou, Zhejiang (CN)
(74) Representative: Patentanwaltskanzlei WILHELM & BECK

(57) **Abstract**

The present invention relates to a digital photo frame (200), which includes a scanner (101) to convert a picture into an image data file, wherein the scanner (101) is a sheetfed scanner (101), and the scanner (101) can reduce the scanning size limitations of a flatbed scanner and to promote the utility of the digital photo frame (200).

## Description

The present invention relates to a digital photo frame. More particularly, it relates to a digital photo frame having a built-in sheetfed scanner.

Nowadays, most of pictures are shot by a digital camera. In order to review these pictures, the image data of the digital camera must be transferred to a personal computer first, and then the pictures from the image data could be printed or displayed on a screen.

With the development of digital multi-media, a heavy and clumsy conventional photo album has been gradually replaced by a modem digital photo frame. A prior digital photo frame could transfer an image data to a memory in the digital photo frame via wired or wireless transmission and present the image data on the screen of the digital photo frame. Thus, the drawback, reviewing the pictures only via a personal computer, is settled and a digital photo frame makes reviewing the pictures more convenient and time-saving.

However, some people still use a traditional camera to take pictures and take the films to a photo studio for photos. It makes a scanner a necessary tool for transferring photos into an image data. When using a scanner, it is inevitable to connect the scanner to a computer. The use of a scanner is time-consuming and not convenient. Therefore, a digital photo frame with a built-in scanner consequently becomes a competitive product.

So far, digital photo frames having a built-in scanner are all based on a "flatbed" scanner, and the scanning scope of a flatbed scanner is usually fixed such as "3×5" or "4×6." However, a digital photo frame could also show documents, pictures and photos with various sizes like a wide-angle photo and so on. Accordingly, a limitation of scanning scope would decrease the utility of a digital photo frame. Besides this, a built-in flatbed scanner would take a lot of space of a digital photo frame and cause the digital photo frame much bigger than an ordinary one.

Therefore, it would be useful to invent a digital photo frame to circumvent all the above issues. In order to fulfill this need the inventors have proposed an invention "DIGITAL PHOTO FRAME HAVING A BUILT-IN SCANNER." The summary of the present invention is described as follows.

According to the first aspect of the present invention, a digital photo frame includes: a sheetfed scanner scanning a picture and generating an image data; a processor controlling the sheetfed scanner and processing the image data; and a display device coupled to the processor and generating an image output.

Preferably, the digital photo frame is provided, wherein the sheetfed scanner further includes a slot receiving the picture, a cover covering the slot and a cover sensor generating a first signal to start the scanner when the cover is open and generating a second signal to stop the scanner when the cover is closed.

Preferably, the digital photo frame is provided, wherein the sheetfed scanner further includes a suspend mode for power saving, and the processor actuates the sheetfed scanner.

Preferably, the digital photo frame further includes an interface module and a memory, wherein the memory is coupled to the processor and stores the image data, and the interface module is coupled to the sheetfed scanner and the processor, transports the image data from the scanner to the processor and further includes a memory card slot.

Preferably, the digital photo frame is provided, wherein the interface module further includes at least one data port coupled to the processor and connecting one of a computer or a multimedia device.

Preferably, the digital photo frame is provided, wherein the at least one data port could be an USB interface, a RS232 interface, an IEEE1394 interface or the conventional interface.

Preferably, the digital photo frame is provided, wherein the interface module further includes a switch circuit coupled to the processor, the sheetfed scanner and a switch data port, and switching between the sheetfed scanner and the switch data port.

Preferably, the digital photo frame is provided, wherein the at least one data port may connects an external scanner.

Preferably, the digital photo frame further includes a controlling panel coupled to and controlling the processor.

Preferably, the digital photo frame further includes a frame having a supporting base.

Preferably, the digital photo frame further includes an remote controlling module having a signal receiver and an external remote controller, wherein the signal receiver is coupled to the processor and receives a signal generated by the external remote controller..

Preferably, the digital photo frame further includes at least one speaker coupled to the processor and outputting the audio data.

Preferably, the digital photo frame further includes a rotation detector coupled to the processor and adjusting the orientation of the image output.

Preferably, the digital photo frame is provided, wherein the display device is a liquid crystal display (LCD) having a light emitting diode (LED) backlight.

Preferably, the digital photo frame further includes a lighting sensor coupled to the processor, sensing the ambient light and controlling the brightness of the LCD.

According to the second aspect of the present invention, a digital photo frame includes: a sheetfed scanner scanning a picture and generating an image data; a processor coupled to the sheetfed scanner and processing the image data so as to generate an image.

Preferably, the digital photo frame further includes a memory and a display device, wherein the memory is coupled to the processor and stores the image data, the display device is coupled to the processor and displays the image, and the sheetfed scanner further includes a slot receiving the picture, a cover covering the slot and a cover sensor generating a first signal to start the scanner when the cover is open and generating a second signal to stop the scanner when the cover is closed.

Preferably, the digital photo frame is provided, wherein the sheetfed scanner further includes a suspend mode for power saving.

Preferably, the digital photo frame further includes at least one data port connecting an external scanning device.

According to the third aspect of the present invention, a digital photo frame includes a sheetfed scanner scanning a picture and generating an image.

The foregoing and other features and advantages of the present invention will be more clearly understood through the following descriptions with reference to the drawings:

Fig. 1 shows the electrical connection of the first embodiment of the present invention;

Fig. 2a is a diagram showing a front view for a digital photo frame of the first embodiment of the present invention;

Fig. 2b is a diagram showing a rear view for a digital photo frame of the first embodiment of the present invention;

Fig. 2c is a diagram showing a digital photo frame of the first embodiment of the present invention (scanning);

Fig. 3 is a diagram showing the electrical connection of the second embodiment of the present invention; and

Fig. 4 is a diagram showing a digital photo frame of the second embodiment of the present invention.

The present invention will now be described more specifically with reference to the following embodiments. It is to be noted that the following descriptions of preferred embodiments of this invention are presented herein for the aspect of illustration and description only; it is not intended to be exhaustive or to be limited to the precise from disclosed.

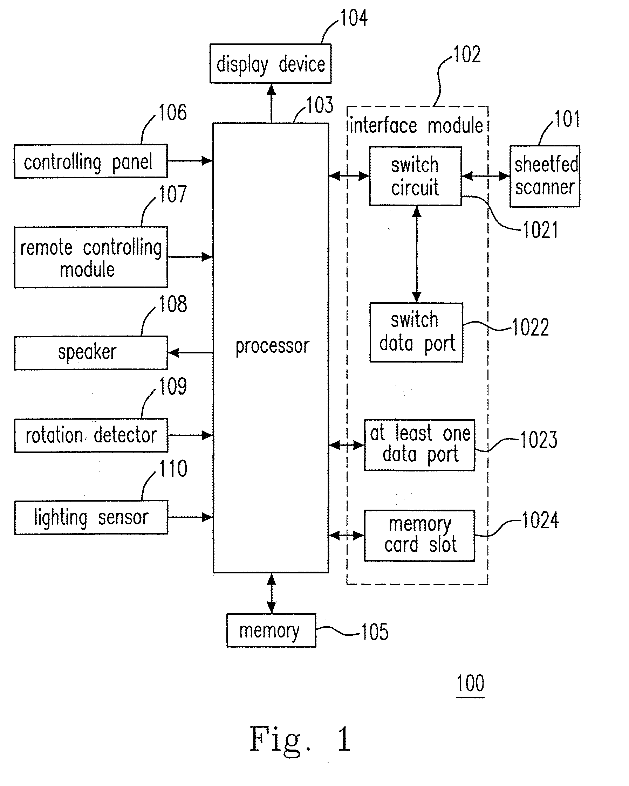

Please refer to Fig. 1 which shows the electrical connection of the first embodiment 100 of the present invention. A sheetfed scanner 101 is coupled to interface module 102. The interface module 102 includes a switch circuit 1021, a switch data port 1022, at least one data port 1023 and a memory card slot 1024. The switch circuit 1021 is further coupled to the sheetfed scanner 101 and the switch data port 1022 respectively. Besides, a processor 103 is coupled to the switch circuit 1021, the at least one data port 1023, the memory card slot 1024, a display device 104, a memory 105, a controlling panel 106, a remote controlling module 107, a speaker 108, a rotation detector 109 and a lighting sensor 110.

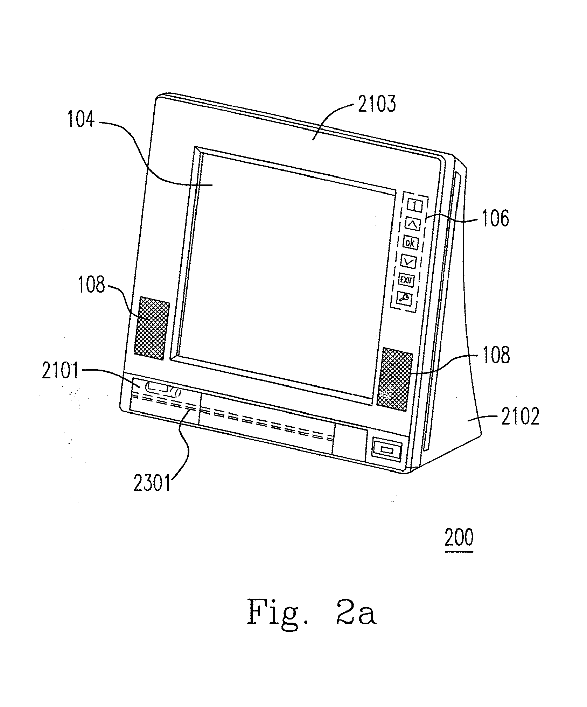

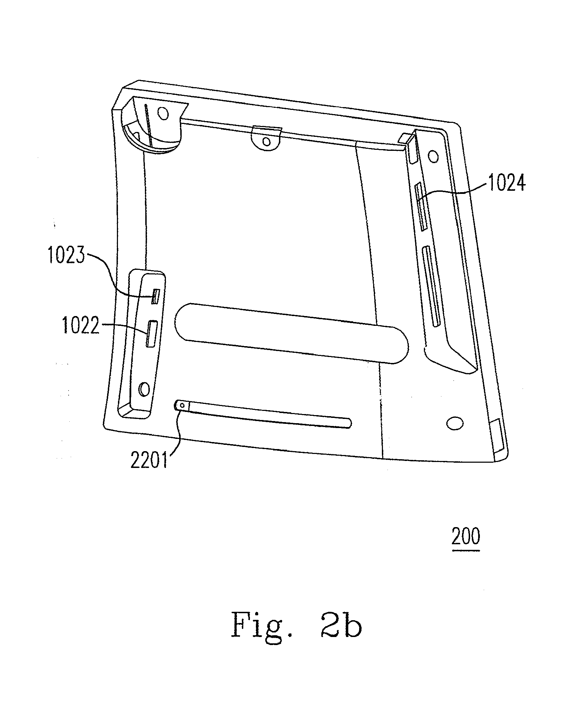

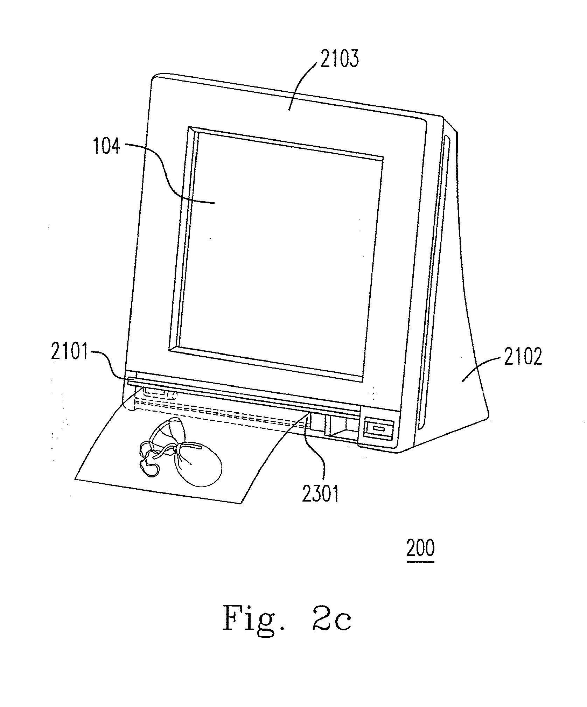

Please refer to Figs. 2a, 2b and 2c which show a digital photo frame 200 of the first embodiment 100 of the present invention. The elements of the first embodiment 100 are described with these Figs. as follows. When a picture enters an import slot 2301, a sheetfed scanner of the digital photo frame 200 starts to scan the picture and transfers the picture to an image data, such as a JPG file, a TIF file, a BMP file, a GIF file or other files with conventional formats. When the scanning process is finished, the picture is outputted from an export slot 2201. The image data is stored in a memory of the digital photo frame 200, such as hard discs, memory cards, a flash memory or any other conventional memory device. By this way, time for scanning pictures and transporting data via personal computer is correspondingly reduced. Furthermore, the sheetfed scanner 101 has no length limitation for a picture so as to promote the utility of the digital photo frame 200. The advantages can not be reached by a flatbed scanner since the flatbed scanner has a width limitation and a length limitation. The sheetfed scanner 101 can further include a cover 2101 and a switch (not shown) or a sensor (not shown). The cover 2101 provides a function to prevent dust from entering the sheetfed scanner 101 so that the scanning would not be affected. The switch or the sensor can use a mechanical method, magnetic method, photo-electrical method or other circuit to detect whether the cover 2101 is open or not. Once the cover 2101 is open, a signal is generated to start the sheetfed scanner 101 and the display device 104. By this way, the sheetfed scanner 101 could be waked up without using a controlling panel and users could enjoy the fun of scanning and reviewing at the same time. Consequently the sheetfed scanner 101 would be set into suspend mode for power saving when the cover 2101 is closed. It is noted that the cover 2101 covers the import slot 2301, which is used to receive a picture, of the sheetfed scanner 101. The import slot 2301 is preferably configure in the front of the digital photo frame 200 (the same side as the display device 104) so that users could review the image conveniently while scanning, and the situation of picture jamming or incapability of rejecting pictures due to the shorter picture length would be avoided. Furthermore, the sheetfed scanner 101 preferably has a suspend mode. That is to say, when the sheetfed scanner 101 is active for a period of time and do not process any scanning, the sheetfed scanner 101 would be set into suspend mode for power saving.

The interface module 102 of the first embodiment 100 transports data between the processor 103 and sheetfed scanner 101 or other device. The interface module 102 includes the switch circuit 1021, the switch data port 1022, the at least one data port 1023 and the memory card slot 1024. Certainly, the interface module 102 may include a combination of these components. The memory card slot 1024 is connected to a memory card to receive data from the memory card or transmit data to the memory card. The memory card slot 1024 could be a SD card slot, CF card slot, MS card slot, xD card slot, MMC card slot, Multi in 1 card slot and other conventional memory card slot. The at least one data port 1023 could be connected to a computer or a multimedia device, such as a digital camera, a printer, a scanner, a hard drive, a camcorder and so on. The switch circuit 1021 coupled to the processor 103 is used to switch the connection between the switch data port 1022 and the sheetfed scanner 101. That is, when the switch data port 1022 is connected to an external device, the connection would be switched to the switch data port 1022 by the switch circuit 1021. Furthermore, the interface adopted by the interface module 102 could be an Universal Serial Bus (USB 1.0, USB 1.1, USB 2.0, USB 3.0), a Recommended Standard 232 (RS232) interface, an Institute of Electrical and Electronics Engineers 1394 (IEEE 1394) interface or other conventional interfaces.

The digital photo frame 200 of the first embodiment 200 further includes a frame 2103, the controlling panel 106, the remote controlling module 107, the speaker 108, the rotation detector 109 and the lighting sensor 110. The frame 2103 has a base 2102 to support the digital photo frame 200. Users can input instructions to operate the digital photo frame 200 via the controlling panel 106, such as reviewing pictures, scanning, storing data and so on. The remote controlling module 107 includes a receiver and an external remote controller. The receiver could receive a signal from the external remote controller to operate the digital photo frame 200. The speaker 108 outputs audio data, such as MP3, WMV or other audio file with a conventional format, for users' listening. The rotation detector 109 can detect whether the digital photo frame 200 is placed in portrait or landscape orientation by a roll ball switch and adjust the orientation of the image output accordingly. Moreover, the display device 104 is a liquid crystal display (LCD) and has a light emitting diode (LED) backlight so that users could watch the display device in a dark circumstance without any light. The digital photo frame 200 preferably has a lighting sensor 110 and the lighting sensor 110 could sense the ambient light and control the brightness of the LCD.

The processor 103 is coupled to these components as shown in Fig. 1 and receive users' instructions via the controlling panel 106 or remote controlling module 107 to operate the digital photo frame 200 for scanning pictures, to gain image data, outputting the image data via the display device 104, storing the image data in a memory, outputting audio data via the speaker 108 or controlling external multimedia devices to process data. Furthermore, the processor 103 receives a signal from the lighting sensor 110 to control the brightness of the LCD and receives a signal from the rotation detector 109 to adjust the orientation of the image output. It is noted that the processor 103 could also actuate the sheetfed scanner 101.

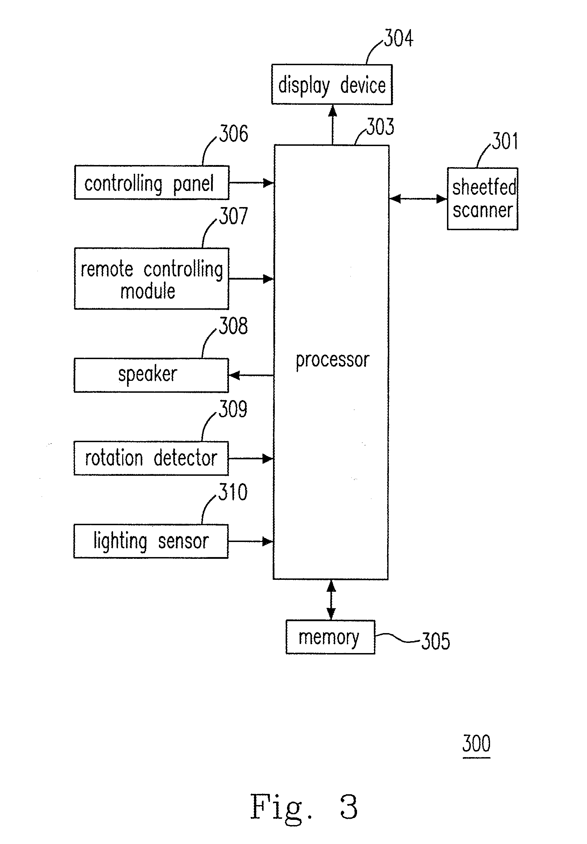

Please refer to Fig. 3 which shows the electrical connection of the second embodiment 300 of the present invention. A processor 303 is coupled to a sheetfed scanner 301, a display device 304, a memory 305, a controlling panel 306, a remote controlling module 307, a speaker 308, a rotation detector 309 and a lighting sensor 310.

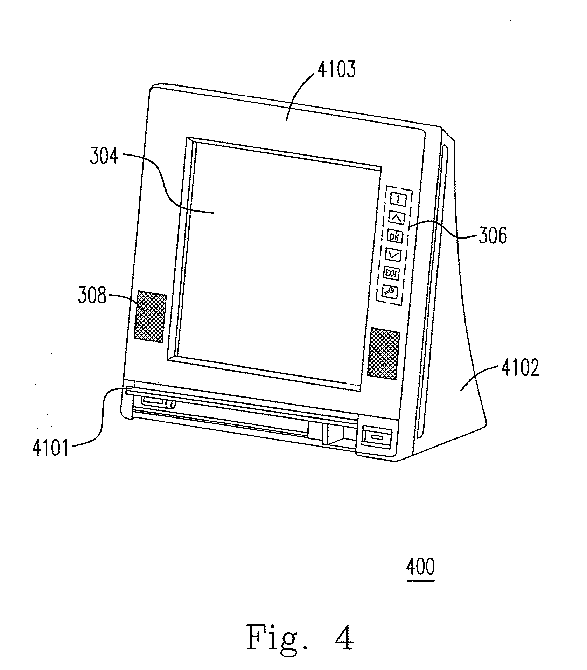

Please refer to Fig. 4 which shows a digital photo frame 400 of the second embodiment 300 of the present invention. When a picture enters the import slot, the sheetfed scanner of the digital photo frame 400 starts to scan the picture and transfers the picture to an image data, such as a JPG file, a TIF file, a BMP file, a GIF file or other files with conventional formats. When the scanning process is finished, the picture is outputted from the export slot 2201. The image data is stored in a memory of the digital photo frame 400, such as hard discs, memory cards, a flash memory or any other conventional memory device. By this way, time for scanning pictures and transporting data via personal computer is saved. Furthermore, the sheetfed scanner 301 has no length limitation for a picture so as to promote the utility of the digital photo frame 400. The advantages can not be reached by a flatbed scanner since the flatbed scanner has a width limitation and a length limitation. The sheetfed scanner 301 can further include a cover 4101 and a switch (not shown) or a sensor (not shown). The cover 4101 provides a function to prevent dust from entering the sheetfed scanner 301 so that the scanning would not be affected. The switch or the sensor can use a mechanical method, magnetic method, photo-electrical method or other circuit to detect whether the cover 4101 is open or not. Once the cover 4101 is open, a signal is generated to start the sheetfed scanner 301 and the display device 304. By this way, the sheetfed scanner 301 could be waked up without using the controlling panel 306 and users could enjoy the fun of scanning and reviewing at the same time. Consequently the sheetfed scanner 301 would be set into suspend mode for power saving when the cover 4101 is closed. It is noted that the cover 4101 covers the import slot, which is used to receive a picture, of the sheetfed scanner 301. The import slot is preferably configure in the front of the digital photo frame 400 (the same side as the display device 304) so that users could review the image conveniently while scanning, and the situation of picture jamming or incapability of rejecting pictures due to the shorter picture length would be avoided. Furthermore, the sheetfed scanner 301 preferably has a suspend mode. That is to say, when the sheetfed scanner 301 actives for a period of time and do not process any scanning, the sheetfed scanner 301 would be set into suspend mode for power saving.

The digital photo frame 400 of the second embodiment 300 further includes a frame 4103, the controlling panel 306, the remote controlling module 307, the speaker 308, the rotation detector 309 and the lighting sensor 310. The frame 4103 has a base 4102 to support the digital photo frame 400. Users can input instructions to operate the digital photo frame 400 via the controlling panel 306, such as reviewing pictures, scanning, storing data and so on. The remote controlling module 307 includes a receiver and an external remote controller. The receiver could receive a signal from the external remote controller to operate the digital photo frame 400. The speaker 308 outputs audio data, such as MP3, WMV or other audio file with a conventional format, for users' listening. The rotation detector 309 can detect whether the digital photo frame 400 is placed in portrait or landscape orientation by a roll ball switch and adjust the orientation of the image output accordingly. Moreover, the display device 304 is a liquid crystal display (LCD) and has a light emitting diode (LED) backlight so that users could watch the display device in a dark circumstance without any light. The digital photo frame 400 preferably has a lighting sensor 310 and the lighting sensor 310 could sense an ambient light and control the brightness of the LCD.

The processor 303 is coupled to these components as shown in Fig. 3 and receive users' instructions via the controlling panel 306 or remote controlling module 307 to operate the digital photo frame 400 for scanning pictures, to gain image data, outputting the image data via the display device 304, storing the image data in a memory, or outputting audio data via the speaker 308. Furthermore, the processor 303 receives a signal from the lighting sensor 310 to control the brightness of the LCD and receives a signal from the rotation detector 309 to adjust an orientation of the image output.

## Claims

1. A digital photo frame (200), **characterized by** comprising:
a sheetfed scanner (101) scanning a picture and generating an image data.

2. A digital photo frame (200) as claimed in claim 1, **characterized in that** the sheetfed scanner (101) further comprises:
a processor (103) controlling the sheetfed scanner (101) and processing the image data; and
a display device (104) coupled to the processor (103) and generating an image output.

3. A digital photo frame (200) as claimed in claim 2, **characterized in that** the sheetfed scanner (101) further comprises a slot (2301) receiving the picture, a cover (2101) covering the slot (2301) and a cover sensor generating a first signal to start the sheetfed scanner (101) when the cover (2101) is open and generating a second signal to stop the sheetfed scanner (101) when the cover (2101) is closed.

4. A digital photo frame (200) as claimed in claim 2, **characterized in that** the sheetfed scanner (101) further comprises a suspend mode for power saving, and the processor (103) actuates the sheetfed scanner (101).

5. A digital photo frame (200) as claimed in claim 2 further **characterized by** comprising an interface module (102) and a memory (105), wherein the memory (105) is coupled to the processor (103) and stores the image data, and the interface module (102) is coupled to the sheetfed scanner (101) and the processor (103), transports the image data from the sheetfed scanner (101) to the processor (103) and further comprises a memory card slot (1024).

6. A digital photo frame (200) as claimed in claim 5, **characterized in that** the interface module (102) further comprises at least one data port (1023) coupled to the processor (103) and connecting one of a computer and a multimedia device, and the at least one data port (1023) is one selected from a group consisting of an USB interface, a RS232 interface, an IEEE1394 interface and a conventional interface.

7. A digital photo frame (200) as claimed in claim 6, **characterized in that** the at least one data port (1023) connects an external scanner.

8. A digital photo frame (200) as claimed in claim 5, **characterized in that** the interface module (102) further comprises a switch circuit (1021) coupled to the processor (103), the sheetfed scanner (101) and a switch data port (1022), and switching between the sheetfed scanner (101) and the switch data port (1022).

9. A digital photo frame (200) as claimed in claim 2 further **characterized by** comprising a controlling panel (106) coupled to and controlling the processor (103).

10. A digital photo frame (200) as claimed in claim 2 further **characterized by** comprising a frame having a supporting base (2102).

11. A digital photo frame (200) as claimed in claim 2 further **characterized by** comprising an remote controlling module (107) having a signal receiver and an external remote controller, wherein the signal receiver is coupled to the processor (103) and receives a signal generated by the external remote controller.

12. A digital photo frame (200) as claimed in claim 2 further **characterized by** comprising at least one speaker (108) coupled to the processor (103) and outputting an audio data.

13. A digital photo frame (200) as claimed in claim 2 further **characterized by** comprising a rotation detector (109) coupled to the processor (103) and adjusting an orientation of the image output.

14. A digital photo frame (200) as claimed in claim 2, **characterized in that** the display device (104) is a liquid crystal display (LCD) having a light emitting diode (LED) backlight.

15. A digital photo frame (200) as claimed in claim 14 further **characterized by** comprising a lighting sensor (110) coupled to the processor (103), sensing an ambient light and controlling a brightness of the LCD.
